# EUROPEAN PATENT APPLICATION

(11) **EP 4 379 919 A1**
(43) Date of publication of application: **05.06.2024**
(21) Application number: 23210463.8
(22) Date of filing: 16.11.2023
(51) Int. Cl.: H01M 50/202, H01M 50/308, H01M 50/367

(54) **BATTERY PACK**

(30) Priority: 30.11.2022 KR 20220163997
(71) Applicant: SK On Co., Ltd., Seoul 03161 (KR)
(72) Inventor: JEONG, Won Seok, 34124 Daejeon (KR); JEON, Hae Ryong, 34124 Daejeon (KR)
(74) Representative: Stolmár & Partner Patentanwälte PartG mbB

(57) **Abstract**

A battery pack (1000) according to an embodiment of the present disclosure may include: a plurality of battery cells (1200) including a venting portion (1240); a pack housing (1100) in which a plurality of battery cells are disposed in a longitudinal direction, the pack housing including a venting hole (1310) communicating with the venting portion; and a gas discharge passage (1400) communicating with the venting hole, and configured to discharge gas discharged through the venting portion externally, wherein the gas discharge passage may include a body portion (1410) coupled to the pack housing; and a main passage (1420) connected to the body portion, and having a form of a tube extending in a longitudinal direction of the pack housing.

## Description

### TECHNICAL FIELD

The present disclosure relates to a battery pack.

### BACKGROUND

A secondary battery refers to a battery that can be repeatedly charged and discharged because mutual conversion between chemical energy and electrical energy is reversible.

Such a secondary battery may be used as an energy source for electric vehicles, hybrid vehicles, energy storage systems (ESSs), and the like, which have recently attracted attention, including mobile devices.

The secondary battery may be used in a form in which one or more battery cells formed of a flexible pouch-type battery cell or a prismatic or cylindrical can-type battery cell having rigidity are electrically connected, and in particular, in the case of an electric vehicle requiring high-output power characteristics, it may be used in a form of a battery module in which one or more cell stacks in which a plurality of battery cells are stacked are electrically connected or a battery pack in which one or more battery modules are electrically connected.

Meanwhile, a battery cell may ignite for various reasons, and flames or high-temperature gas ejected from the battery cell may flow within the battery module and propagate to other neighboring battery cells.

In particular, when one or more battery modules are disposed and mounted closely, such as an electric vehicle, flames or ash ejected when a battery cell ignites, may flow and cause thermal propagation to adjacent battery modules, and there is a problem that a conductive flammable material may cause electrical short circuits between components, which can accelerate thermal propagation and thermal runaway.

### SUMMARY

An aspect of the present disclosure is to provide a battery pack having a structure that can safely discharge high-temperature gas, or the like, generated from battery cells.

According to an aspect of the present disclosure, a battery pack may include: a plurality of battery cells including a venting portion; a pack housing in which a plurality of battery cells are disposed in a longitudinal direction, the pack housing including a venting hole communicating with the venting portion; and a gas discharge passage communicating with the venting hole, and configured to discharge gas discharged through the venting portion externally, wherein the gas discharge passage may include a body portion coupled to the pack housing; and a main passage connected to the body portion, and having a form of a tube extending in a longitudinal direction of the pack housing.

According to an aspect of the present disclosure, the plurality of battery cells may include the venting portion in at least one side in a longitudinal direction, wherein the plurality of venting holes may be provided in at least one of the pack housing in a longitudinal direction of the pack housing to correspond each of the plurality of battery cells, and the plurality of battery cells may be disposed to be adjacent to the venting hole in a state in which the venting portion is disposed in a width direction of the pack housing.

According to an aspect of the present disclosure, a gas guide portion disposed between the venting portion and the venting hole, and guiding gas discharged from the venting portion to the venting hole, may be further included.

According to an aspect of the present disclosure, the venting hole may be formed in a height direction of the pack housing, and the gas guide portion may have a length in a direction, parallel to the venting hole.

According to an aspect of the present disclosure, the pack housing may include a lower plate; and a guide bar disposed on the lower plate, the guide bar including the venting hole, and the gas guide portion may be coupled to the venting hole.

According to an aspect of the present disclosure, the gas guide portion may include a first portion including an inclined surface, and facing the venting portion; and a second portion including a straight surface, and coupled to the venting hole.

According to an aspect of the present disclosure, the lower plate may include a groove portion in a surface opposite to a surface on which the guide bar is disposed), wherein the body portion may be disposed in the groove portion.

According to an aspect of the present disclosure, the gas discharge passage may further include an extension portion extending from the main passage, and gas discharged through the venting portion may be discharged externally through an exhaust port of the gas discharge passage.

According to an aspect of the present disclosure, the gas discharge passage may further include at least one of a first extension portion extending from the main passage in a longitudinal direction of the pack housing; and a second extension portion extending from the main passage in a width direction of the pack housing.

According to an aspect of the present disclosure, the gas discharge passage may further include a backflow prevention valve so that gas flowing into the gas discharge passage flows in one direction.

According to an aspect of the present disclosure, a vehicle may include the battery pack described above, and gas discharged through the venting portion may be disposed to a side surface.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a perspective view of a battery pack according to an embodiment of the present disclosure.
FIG. 2 is a perspective view of a pack housing according to an embodiment of the present disclosure.
FIG. 3 is an enlarged view of portion A of FIG. 1.
FIG. 4 is a rear view of FIG. 3.
FIG. 5 is a diagram illustrating a battery cell and a gas guide portion according to an embodiment of the present disclosure.
FIGS. 6A to 6D are diagrams illustrating gas discharge passages according to various embodiments of the present disclosure.

### DETAILED DESCRIPTION

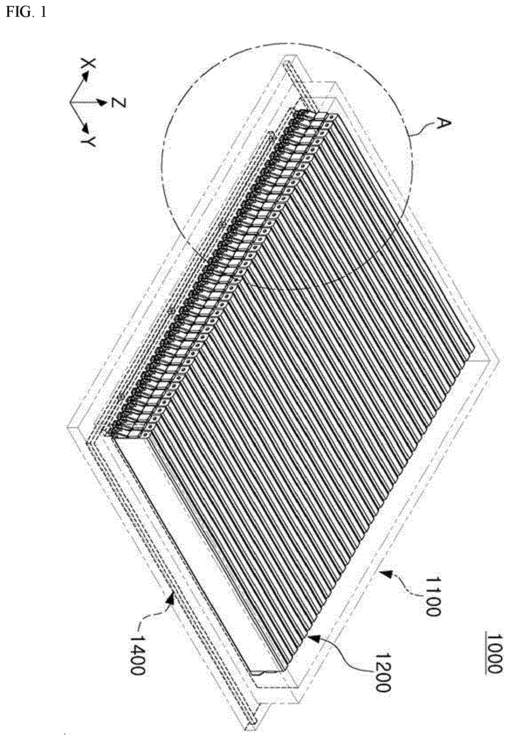

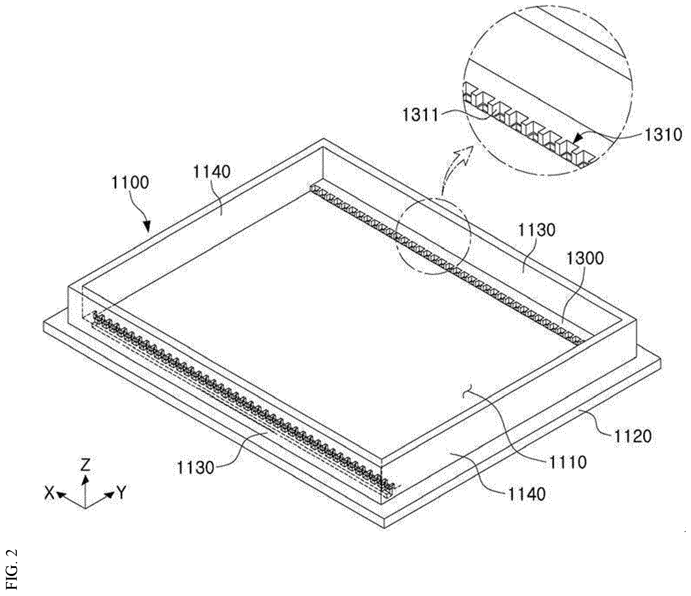

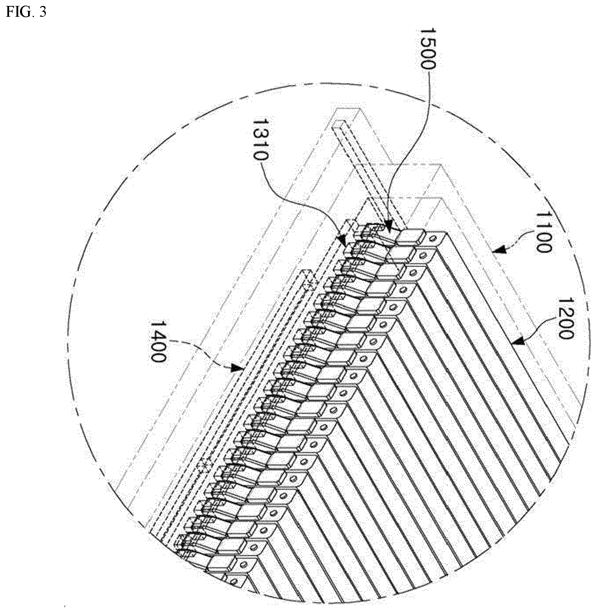

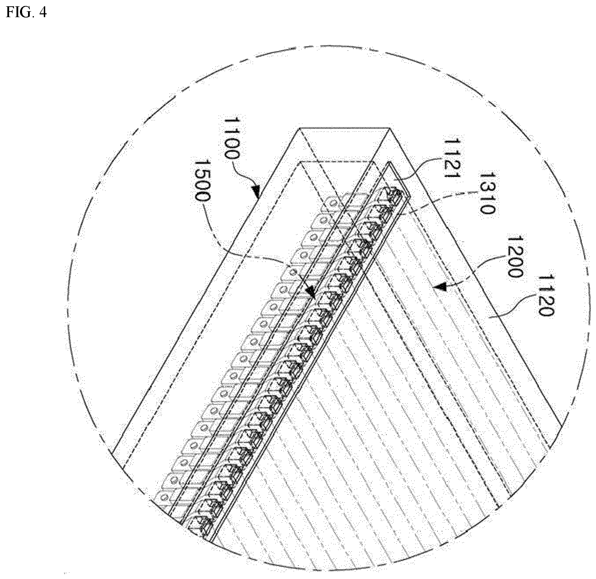

FIG. 1 is a perspective view of a battery pack according to an embodiment of the present disclosure, FIG. 2 is a perspective view of a pack housing according to an embodiment of the present disclosure, FIG. 3 is an enlarged view of portion A of FIG. 1, and FIG. 4 is a rear view of FIG. 3.

Referring to FIGS. 1 to 4, a battery pack 1000 according to an embodiment of the present disclosure may include a pack housing 1100 and a plurality of battery cells 1200 disposed in the pack housing 1100. Although omitted in the drawing, the battery pack 1000 may include a pack cover (not shown) coupled to an upper portion of the pack housing 1100 to cover the plurality of battery cells 1200.

In addition, the battery pack 1000 according to an embodiment of the present disclosure may include a gas discharge passage 1400 coupled to the pack housing 1100. The gas discharge passage 1400 may safely discharge high-temperature gas, or the like (including flammable ash) generated from the plurality of battery cells 1200 externally.

Referring to FIG. 1, the battery pack 1000 according to an embodiment of the present disclosure may have a plurality of battery cells 1200 directly assembled into the pack housing 1100. In other words, the battery cells 1200 may form a battery module and be assembled into the pack housing 1100 in a unit of individual battery cells 1200, without being assembled into the pack housing 1100 in a unit of battery modules.

The pack housing 1100 may include a lower plate 1120 forming a bottom surface and side frames 1130 and 1140 forming a side surface. Hereinafter, the first side frame 1130 may refer to a frame disposed in a width direction of the pack housing 1100, and the second side frame 1140 may refer to a frame disposed in a longitudinal direction of the pack housing 1100.

The pack housing 1100 may have an internal space 1110 in which a plurality of battery cells 1200 are disposed. For example, the internal space 1110 may be formed by the lower plate 1120 and the side frames 1130 and 1140.

The pack housing 1100 and the internal space 1110 of the pack housing 1100 may extend in a first direction (or x-direction), and the plurality of battery cells 1200 may be arranged in the first direction in the internal space 1110.

Referring to the drawings, (a plurality of) battery cells 1200 according to an embodiment of the present disclosure may be prismatic battery cells. The prismatic battery cell may refer to a battery cell in which a case 1210 accommodating an electrode assembly and an electrolyte has a flat and angular shape. The plurality of battery cells 1200 may be disposed in the first direction in the internal space 1110 so that wide surfaces of the case 1210 face each other.

The battery cell 1200 may include an electrode terminal 1230 on both sides in a longitudinal direction. In detail, the case 1210 of the battery cell 1200 may be open on both sides in the longitudinal direction, and a cap plate 1220 may be coupled to the opened portion to seal an interior of the case 1210. An electrode terminal 1230 may be provided externally of the cap plate 1220. The plurality of battery cells 1200 may be electrically connected to each other through the electrode terminal 1230 provided externally of the cap plate 1220.

In addition, the battery cell 1200 may include a venting portion 1240 on at least one side of the battery cell 1200, preferably on both sides of the battery cell 1200 in a longitudinal direction. The venting portion 1240 may be provided on the cap plate 1220 together with the electrode terminal 1230, and may be provided on one side (or a lower side) of the cap plate 1220 with respect to the electrode terminal 1230. For example, the battery cell 1200 may be disposed in the pack housing 1100 so that the venting portion 1240 is closer to the lower plate 1120 than the electrode terminal 1230.

High-temperature gas, or the like generated inside the battery cell 1200 may be discharged externally through a venting portion 1240. For example, the venting portion 1240 may be broken when pressure inside the case 1210 exceeds a predetermined pressure and discharge high-temperature gas, or the like generated inside the case 1210 externally.

Meanwhile, according to an embodiment of the present disclosure, the venting portion 1240 of the battery cell 1200 may be covered by a gas guide portion 1500. The gas guide portion 1500 may change a direction of flow of the high-temperature gas, or the like discharged through the venting portion 1240 and may induce the high-temperature gas, or the like to flow into a venting hole 1310 provided in the pack housing 1100. A detailed description of the gas guide portion 1500 will be provided later.

Referring to the drawings, the plurality of battery cells 1200 may be disposed in an internal space 1110 of the pack housing 1100 so that the longitudinal direction is parallel to a second direction (or y-direction). For example, the second direction may be a width direction of the pack housing 1100 and the internal space 1110 of the pack housing 1100, and the plurality of battery cells 1200 may be disposed in the internal space 1110 of the pack housing 1100 so that the longitudinal direction thereof is parallel to the pack housing 1100 and the width direction of the internal space 1110 of the housing 1100.

Therefore, the cap plate 1220 coupled to both sides of the battery cell 1200 in the longitudinal direction may face a first side frame 1130 disposed in the width direction of the pack housing 1100 while the battery cell 1200 is disposed in the internal space 1110 of the pack housing 1100, and accordingly, a venting portion 1240 provided on the cap plate 1220 may also face a first side frame 1130 disposed in the width direction of the pack housing 1100. That is, the venting portion 1240 may be disposed to face a second direction, and the high-temperature gas, or the like, can be discharged in the second direction through the venting portion 1240.

Referring to FIG. 2, the pack housing 1100 may include a plurality of venting holes 1310 in an internal space 1110 penetrating through the pack housing 1100 in a height direction (or z-direction). Hereinafter, a third direction may refer to the height direction of the pack housing 1100. According to an embodiment of the present disclosure, high-temperature gas, or the like generated inside the battery cell 1200 may be configured to be discharged through the venting portion 1240, sequentially pass through the venting hole 1310 and a gas discharge passage 1400 to be described later, and be discharged externally.

A plurality of venting holes 1310 may be provided in a guide bar 1300. The guide bar 1300 may extend in a first direction, and the plurality of venting holes 1310 may be provided on the guide bar 1300 at predetermined intervals in the first direction. An interval between the venting holes 1310 may be approximately the same as an interval between the battery cells 1200.

The guide bar 1300 may be provided in pairs, and may be disposed on the lower plate 1120 to be spaced apart in a second direction. For example, one side of the guide bar 1300 may face an internal space 1110, and the other side thereof may be in contact with a first side frame 1130. That is, the plurality of battery cells 1200 may face the first side frame 1130 with the guide bar 1300 interposed therebetween in a state in which the plurality of battery cells 1200 are disposed in the internal space 1110 of the pack housing 1100.

Each of the plurality of venting holes 1310 may communicate with a venting portion 1240 of the plurality of battery cells 1200. To this end, as described above, the plurality of battery cells 1200 may be disposed in the internal space 1110 of the pack housing 1100 so that one side of the cap plate 1220 provided with the venting portion 1240 is adjacent to the lower plate 1120. In addition, accordingly, the venting portion 1240 may be adjacent to a plurality of venting holes 1310 provided in the guide bar 1300.

A plurality of battery cells 1200 may be fixed to the guide bar 1300 on both sides in a longitudinal direction. Referring to FIGS. 1 to 4, the venting portion 1240 of the plurality of battery cells 1200 may be covered by a gas guide portion 1500. The gas guide portion 1500 may be configured to be manufactured integrally with the guide bar 1300 or the pack housing 1100 while being coupled to the venting hole 1310, or may be configured to be manufactured separately from the guide bar 1300 or the pack housing 1100. That is, the gas guide portion 1500 may be disposed to cover the venting portion 1240 of the battery cell 1200 while being provided or coupled to the pack housing 1100.

Regarding the embodiment in which the gas guide portion 1500 is manufactured separately from the guide bar 1300 or the pack housing 1100, referring to FIG. 2, the venting hole 1310 may include an opened portion 1311 toward the plurality of battery cells 1200, and the gas guide portion 1500 may be coupled to the opened portion 1311. The plurality of battery cells 1200 may be fixed to the guide bar 1300 by being coupled to the gas guide portion 1500 on both sides in the longitudinal direction.

From a perspective of the battery cell 1200, this structure may minimize movement due to external shock or vibration and further prevent position deviation. In addition, from a perspective of the battery pack 1000, since the high-temperature gas, or the like discharged through the venting portion 1240 of the battery cell 1200 is directed directly to the venting hole 1310, leakage of gas, or the like, into the internal space 1110 during a process of flowing from the battery cell 1200 to the pack housing 1100 may be minimized.

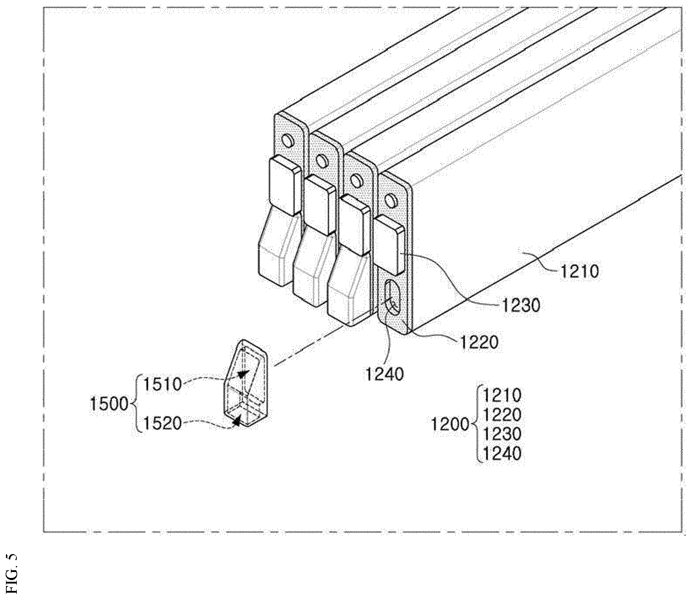

Hereinafter, a shape of a gas guide portion 1500 will be described with reference to FIG. 5.

FIG. 5 is a diagram illustrating a battery cell and a gas guide portion according to an embodiment of the present disclosure.

A guide portion 1500 may be disposed to cover a venting portion 1240, and may be coupled to a battery cell 1200 while covering the venting portion 1240. The gas guide portion 1500 may change a flow direction of high-temperature gas, or the like, discharged through the venting portion 1240 and guide the same to a venting hole 1310.

The gas guide portion 1500 has a hollow interior, and one side thereof may communicate with the venting portion 1240 (more specifically, the broken venting portion 1240), and the other side thereof may communicate with the venting hole 1310. Accordingly, high-temperature gas, or the like discharged through the venting portion 1240 may be guided to the venting hole 1310 through the gas guide portion 1500.

The flow direction of high-temperature gas, or the like discharged through the venting portion 1240 may be changed by approximately 90° while passing through the gas guide portion 1500. For example, based on the drawing, since the venting portion 1240 is formed in a second direction, and the venting hole 1310 is formed in a third direction, perpendicular to the second direction, gas, or the like discharged to the venting portion 1240 may pass through the gas guide portion 1400, so that the flow direction may change from the second direction to the third direction.

Referring to FIG. 5, the gas guide portion 1500 may include a first portion 1510 including an inclined surface in a third direction and a second portion 1520 including a straight surface. Both the inclined surface of the first part 1510 and the straight surface of the second part 1520 may be surfaces facing the battery cell 1200. The first portion 1510 of the gas guide portion 1500 may be disposed to face the venting portion 1240 and can efficiently change a direction of gas discharged through the venting portion 1240. For example, since the gas discharged through the venting portion 1240 first touches the inclined surface of the first portion 1510, it can be smoothly guided to the venting hole 1310 by the gas guide portion 1500. Meanwhile, the second portion 1520 of the gas guide portion 1500 may be coupled to the venting hole 1310.

Meanwhile, high-temperature gas, or the like that has passed through the venting hole 1310 may flow into a gas discharge passage 1400.

The gas discharge passage 1400 may be coupled to the pack housing 1100 and, in detail, may be coupled to a lower plate 1120. The lower plate 1120 may include one surface facing an internal space 1110 and the other surface corresponding to an opposite side of the one surface. A guide bar 1300 may be disposed on one surface of the lower plate 1120, and a groove 1121 may be provided on the other surface thereof.

The groove portion 1121 may be provided in a region corresponding to the region in which the guide bar 1300 is disposed. The groove portion 1121 may extend in a first direction, like the guide bar 1300, and a plurality of venting holes 1310 may be provided on the groove portion 1121 at predetermined intervals in the first direction. As the plurality of venting holes 1310 are formed to penetrate through the pack housing 1100 in a z-direction, one side of the venting hole 1310 may be provided on the guide bar 1300, and the other side of the venting hole 130 may be provided in the groove portion 1121 of the lower plate 1120.

A gas discharge passage 1400 according to an embodiment of the present disclosure may be disposed in the groove portion 1121 of the lower plate 1120 and coupled to the pack housing 1100. The gas discharge passage 1400 may communicate with a plurality of venting holes 1310 provided in the groove portion 1121, and accordingly, high-temperature gas, or the like passing through the plurality of venting holes 1310 may flow sufficiently through the gas discharge passage 1400, and then be discharged externally.

The gas discharge passage 1400 may include a body portion 1410 disposed in the groove portion 1121 and a main passage 1420 through which high-temperature gas, or the like flows.

The body portion 1410 may be formed in a shape corresponding to the groove portion 1121, and may communicate with a plurality of venting holes 1310 provided in the groove portion 1121 at least in some regions thereof.

The main passage 1420 may be connected to the body portion 1410. For example, referring to the drawings, the main passage 1420 may be connected to a side surface of the body portion 1410, and accordingly, high-temperature gas, or the like passing through the plurality of venting holes 1310, may flow into the main passage 1420.

The main passage 1420 may be in a form of a tube extending in a first direction parallel to the body portion 1410. High-temperature gas, or the like flowing into the main passage 1420 may flow in the first direction and then be discharged through an exhaust port 1421 formed at the end of the gas discharge passage 1400. According to an embodiment of the present disclosure, the main passage 1420 has a shape extending in the first direction (or the longitudinal direction of the pack housing 1100), so that high temperature gas, or the like may sufficiently flow within the main passage 1420, and then be discharged externally. As high-temperature gas, or the like flows within the main passage 1420, a temperature and movement speed may be reduced, and accordingly, gas, or the like may be safely discharged.

When the battery pack 1000 according to an embodiment of the present disclosure is mounted on a vehicle, an exhaust port 1421 of the main passage 1420 may be directed toward a side surface of the vehicle. In other words, safety of passengers can be ensured because the gas is finally discharged through the side surface (X- or Y-direction) of the vehicle.

Meanwhile, according to an embodiment of the present disclosure, the gas discharge passage 1400 may further include an extension portion 1422 extending from the main passage 1420. The extension portion 1422 may be disposed between the main passage 1420 and the exhaust port 1421.

The extension portion 1422 may include a first extension portion 1422a extending in a first direction parallel to the main passage 1420 and a second extension portion 1422b extending in a second direction perpendicular to the first direction.

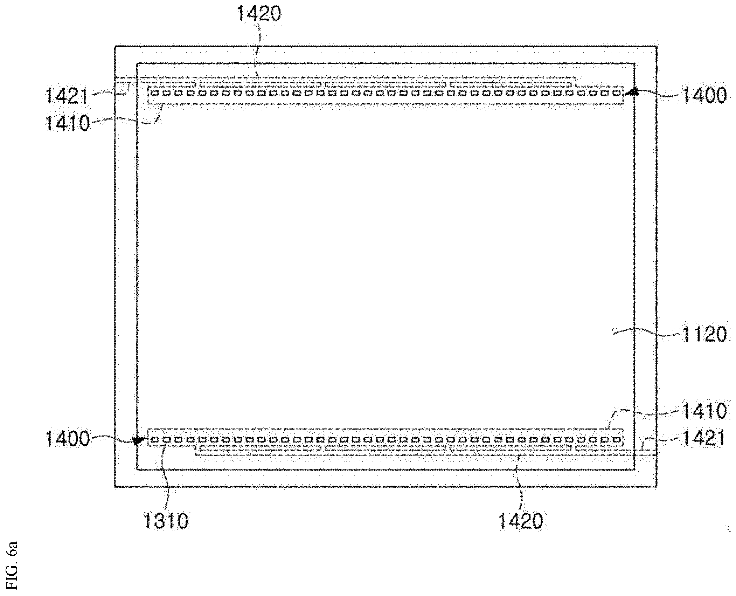

FIGS. 6A to 6D are diagrams illustrating gas discharge passages according to various embodiments of the present disclosure.

FIG. 6A illustrates an embodiment in which a gas discharge passage 1400 includes only a main passage 1420 (not including an extension portion 1422). Referring to FIG. 6A, the gas discharge passage 1400 may include a body portion 1410 and a main passage 1420 connected to the body portion 1410 and extending in a first direction. High-temperature gas, or the like, flowing into the main passage 1420 may flow in the first direction within the main passage 1420 and be discharged externally through an exhaust port 1421.

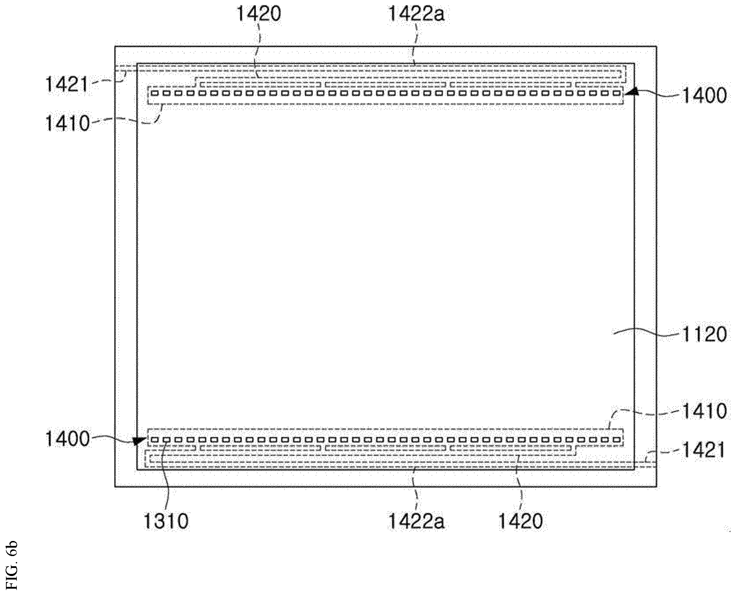

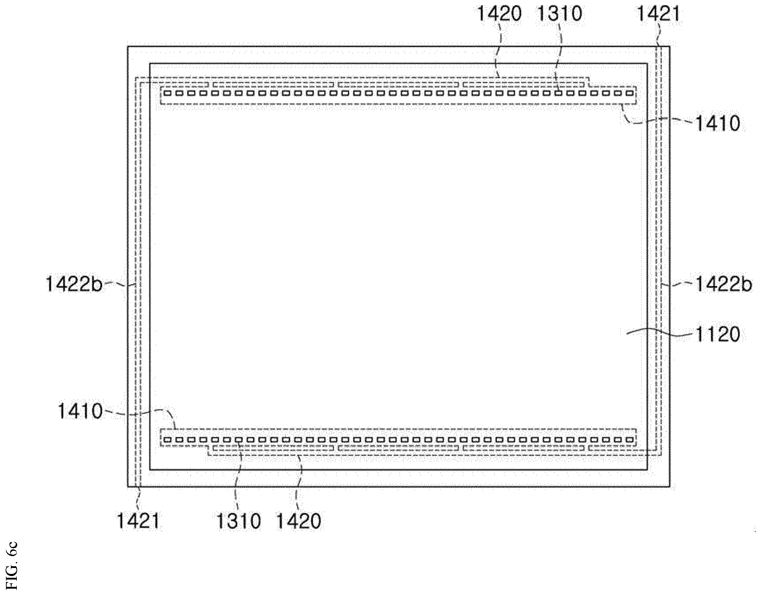

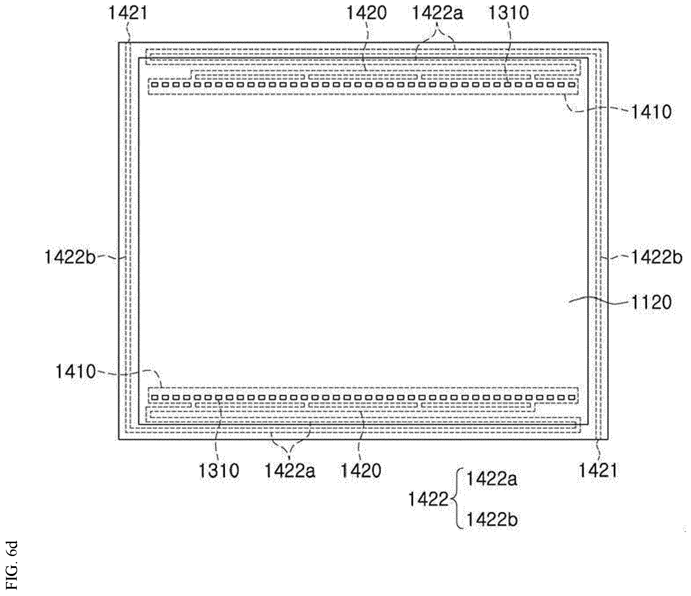

FIGS. 6A to 6D illustrate embodiments in which the gas discharge passage 1400 includes a main passage 1420 and an extension portion 1422. As illustrated in FIG. 6B, the gas discharge passage 1400 may further include a first extension portion 1422a between the main passage 1420 and the exhaust port 1421, or as illustrated in FIG. 6C, the gas discharge passage 1400 may further include a second extension portion 1422b between the main passage 1420 and the exhaust port 1421. Alternatively, as illustrated in FIG. 6D, both the first extension portion 1422a and the second extension portion 1422b may be included between the main passage 1420 and the exhaust port 1421.

According to the embodiment illustrated in FIGS. 6B to 6D, as the gas discharge passage 1400 further includes an extension portion 1422, a length of the passage through which high-temperature gas, or the like flows may increase, and stability of a battery pack 1000 may be further increased.

As a further embodiment, the gas discharge passage 1400 may further include a structure to prevent a backflow of gas, or the like, so that the gas, or the like, flows in one direction. For example, a backflow prevention valve (not shown) may be provided as a structure to prevent the backflow of gas, or the like. The backflow prevention valve may be provided in one or more locations in the main passage 1420 and/or the extension portion 1422.

As described above, in the battery pack 1000 according to an embodiment of the present disclosure, high-temperature gas, or the like discharged from the plurality of battery cells 1200 may not be discharged directly externally through the venting hole 1310, and may be discharged externally after being flowed along the main passage 1420 communicating with the venting hole 1310. Therefore, there is an effect for discharging high temperature gas, or the like more safely.

As set forth above, according to an embodiment of the present disclosure, a battery pack may improve thermal stability by safely discharging high temperature gas, or the like, that can cause fire externally.

## Claims

1. A battery pack, comprising:
a plurality of battery cells including a venting portion;
a pack housing in which a plurality of battery cells are disposed in a longitudinal direction, the pack housing including a venting hole communicating with the venting portion; and
a gas discharge passage communicating with the venting hole, and configured to discharge gas discharged through the venting portion externally,
wherein the gas discharge passage includes a body portion coupled to the pack housing; and
a main passage connected to the body portion, and having a form of a tube extending in a longitudinal direction of the pack housing.

2. The battery pack of claim 1, wherein the plurality of battery cells comprise the venting portion in at least one side in a longitudinal direction, wherein the plurality of the venting holes are provided in at least one side in a width direction of the pack housing to correspond to each of the plurality of battery cells in the longitudinal direction of the pack housing, and
the plurality of battery cells are disposed to be adjacent to the venting hole in a state in which the venting hole is positioned in the width direction of the pack housing.

3. The battery pack of claim 2, further comprising:
a gas guide portion disposed between the venting portion and the venting hole, and guiding the gas discharged from the venting portion to the venting hole.

4. The battery pack of claim 3, wherein the venting hole is formed in a height direction of the pack housing, and
the gas guide portion has a length in a direction, parallel to the venting hole.

5. The battery pack of claim 3, wherein the pack housing comprises
a lower plate; and
a guide bar disposed on the lower plate, the guide bar including the venting hole,
wherein the gas guide portion is coupled to the venting hole.

6. The battery pack of claim 5, wherein the gas guide portion comprises
a first portion including an inclined surface, and facing the venting portion; and
a second portion including a straight surface, and coupled to the venting hole.

7. The battery pack of claim 5, wherein the lower plate comprises a groove portion in a surface opposite to a surface on which the guide bar is disposed,
wherein the body portion is disposed in the groove portion.

8. The battery pack of claim 1, wherein the gas discharge passage further comprises an extension portion extending from the main passage, and the gas discharged through the venting portion is discharged externally through an exhaust port of the gas discharge passage.

9. The battery pack of claim 8,
wherein the gas discharge passage further comprises at least one of
a first extension portion extending from the main passage in a longitudinal direction of the pack housing; and
a second extension portion extending from the main passage in a width direction of the pack housing.

10. The battery pack of claim 1, wherein the gas discharge passage further comprises a backflow prevention valve so that gas flowing into the gas discharge passage flows in one direction.

11. A vehicle, comprising:
the battery pack according to claim 1,
wherein the gas discharged through the venting portion is discharged to a side surface.
